# EUROPEAN PATENT APPLICATION

(11) **EP 2 605 535 A1**
(43) Date of publication of application: **19.06.2013**
(21) Application number: 12196953.9
(22) Date of filing: 13.12.2012
(51) Int. Cl.: H04N 21/81, H04N 21/233, H04N 21/237, H04N 21/422, H04N 21/439, H04N 21/4722, H04N 21/658, G10L 15/30, H04H 60/58, G06F 17/30

(54) **Advertisement providing apparatus and method for providing advertisements**

(30) Priority: 14.12.2011 KR 20110134909; 11.07.2012 KR 20120075695
(71) Applicant: Samsung Electronics Co., Ltd, Gyeonggi-do 443-742 (KR)
(72) Inventor: Lim, Chae-Young, 443-742 Gyeonggi-do (KR); Park, Dong-Ouk, 443-742 Gyeonggi-do (KR); Lee, Jeong-Eun, 443-742 Gyeonggi-do (KR)
(74) Representative: Harrison Goddard Foote LLP

(57) **Abstract**

Methods and apparatuses are provided for providing advertisements in an advertisement providing apparatus (100) such as a mobile terminal. A content provider (50) provides advertising content. The advertising audio signal of the advertising content is reproduced by an advertising medium (10) such as a TV, a PC, or a radio. The advertising audio signal is received and recorded by the advertisement providing apparatus (100) in response to a user input (e.g., keypad or touch input or input by "shaking" the mobile terminal comprising motion recognition sensors), the recorded advertising audio signal is converted into audio data, and the audio data is stored. The audio data and targeting purpose data (user, location, or device information) are transmitted from the advertisement providing apparatus (100) to an advertising server (300). Relevant advertising information is retrieved from among a plurality of advertising information stored in advance in an advertisement database (350), using the received audio data and the targeting purpose data. The advertising information is transmitted from the advertising server (300) to the advertisement providing apparatus (100). The advertising information is output from the advertisement providing apparatus (100). A billing server (400) may be notified of the delivery of the advertising information by the advertisement providing apparatus (100).

## Description

### BACKGROUND OF THE INVENTION

### 1. Field of the Invention

The present invention relates generally to an advertisement providing apparatus and method for providing advertisements, and more particularly, to an advertisement providing apparatus and method for providing advertisements using audio signals.

### 2. Description of the Related Art

Many efforts have been made to create revenue by providing advertisements on mobile terminals due to their frequent use.

Conventional methods of providing advertisements on mobile terminals include a method of creating advertisements including, for example, coupons, mileages or discount services, in the form of text or an image, and unilaterally delivering the created advertisements to the mobile terminals. Another conventional method involves exposing mobile advertising sites, which are created in advance, to users, in attempts to induce the users to directly visit the mobile advertising sites on a mobile terminal. In a further conventional method, a user may request transmission of advertisements by recognizing or acquiring visual advertising information (for example, Quick Response (QR) codes) using a mobile terminal, and then receive the requested advertisements.

However, among these conventional advertisement providing methods, the push method of unilaterally delivering advertisements may cause users to receive unwanted advertisements. The method of providing advertisements by means of mobile advertising sites, created in advance, may cause users to find and access the mobile advertising sites in person. Even when requesting transmission of advertisements using visual advertising information such as QR codes, the user needs to manipulate the mobile terminal several times to receive the advertisements, such as by capturing the visual advertising information by operating a camera mounted in the mobile terminal and transmitting the captured visual advertising information.

Recent developments in mobile terminal technologies and various recognition technologies has made it possible for mobile terminals to recognize voice/audio signals or to recognize motions. The voice/audio recognition technology is capable of recognizing a user's voice/audio signals and converting the voice/audio signals into texts, or is capable of recognizing commands corresponding to the voice/audio signals. The motion recognition technology is used to detect motions of mobile terminals, recognize commands corresponding to the detected motions, and perform functions corresponding thereto. These technologies have been widely used, since they allow a mobile terminal to perform specific functions or recognize specific commands by recognizing voices or motions, even though the mobile terminal is not manipulated by the user.

### SUMMARY OF THE INVENTION

The present invention has been made to address at least the above problems and/or disadvantages and to provide at least the advantages described below. Accordingly, an aspect of the present invention provides an advertisement providing apparatus and method for providing advertisements using motion recognition so that a user may receive advertisements by means of the motion recognition without having to manipulate a mobile terminal with key inputs or touch inputs.

Another aspect of the present invention provides an advertisement providing apparatus and method, in which a user may receive advertisements using audio signals while listening to the audio signals corresponding to the advertisements through media such as a Television (TV), a Personal Computer (PC) or a radio.

In accordance with one aspect of the present invention, an advertisement providing apparatus is provided for receiving and providing advertisements in a mobile terminal. The advertisement providing apparatus includes an audio processor for receiving and recording an advertising audio signal, and for converting the recorded advertising audio signal into audio data. The advertisement providing apparatus also includes a transceiver for transmitting the audio data and targeting purpose data to an advertising server, and for receiving advertising information corresponding to the audio data and the targeting purpose data from the advertising server. The advertisement providing apparatus additionally includes an output unit for outputting the received advertising information. The advertisement providing apparatus further includes a controller for controlling the audio processor to record the advertising audio signal, and for controlling the transceiver to transmit the recorded audio data and the targeting purpose data to the advertising server.

In accordance with another aspect of the present invention, a method is provided for providing advertisements in an advertisement providing apparatus. An advertising audio signal is received and recorded, the recorded advertising audio signal is converted into audio data, and the audio data is stored, at the advertisement providing apparatus. The audio data and targeting purpose data are transmitted from the advertisement providing apparatus to an advertising server, and advertising information corresponding to the audio data and the targeting purpose data is received from the advertising server at the advertisement providing apparatus. The advertising information is output from the advertisement providing apparatus.

In accordance with an additional aspect of the present invention, an advertising server is provided for providing advertisements to an advertisement providing apparatus. The advertising server includes a transceiver for receiving audio data and targeting purpose data from the advertisement providing apparatus, for receiving targeting information corresponding to the targeting purpose data, and for transmitting advertising information corresponding to the audio data and the targeting purpose data to the advertisement providing apparatus. The advertising server also includes an advertising information provider for searching for the advertising information corresponding to the audio data and the targeting information from among a plurality of advertising information stored in advance in an advertisement Database (DB).

In accordance with a further aspect of the present invention, a method is provided for providing advertisements to an advertisement providing apparatus in an advertising server. Audio data and targeting purpose data are received from the advertisement providing apparatus. Relevant advertising information is retrieved from among a plurality of advertising information stored in advance in an advertisement DB, using the received audio data and the targeting purpose data. The received advertising information is transmitted to the advertisement providing apparatus.

### BRIEF DESCRIPTION OF THE DRAWINGS

The above and other aspects, features and advantages of the present invention will be more apparent from the following description when taken in conjunction with the accompanying drawings, in which:
FIG. 1 is a diagram illustrating a method for providing advertisements using motion recognition in a mobile terminal, according to an embodiment of the present invention;
FIG. 2 is a diagram illustrating a configuration of an advertisement providing system, according to an embodiment of the present invention;
FIG. 3 is a diagram illustrating an advertisement providing method, according to a first embodiment of the present invention;
FIG. 4 is a diagram illustrating an advertisement providing method, according to a second embodiment of the present invention;
FIG. 5 is a diagram illustrating an advertisement providing method, according to a third embodiment of the present invention;
FIG. 6 is a diagram illustrating an advertisement providing method, according to a fourth embodiment of the present invention;
FIG. 7 is a diagram illustrating an advertisement providing method, according to a fifth embodiment of the present invention;
FIG. 8 is a diagram illustrating an advertisement providing method, according to a sixth embodiment of the present invention;
FIG. 9 is a diagram illustrating an advertisement providing method, according to a seventh embodiment of the present invention;
FIG. 10 is a diagram illustrating structures of an advertising server, an advertisement DB and a billing server, according to an embodiment of the present invention;
FIG. 11 is a diagram illustrating a structure of a mobile terminal for providing advertisements, according to an embodiment of the present invention;
FIG. 12 is a flowchart illustrating an operation of providing advertisements in a mobile terminal, according to an embodiment of the present invention;
FIG. 13A is a diagram illustrating an example of recording advertising audio signals upon user's request in a mobile terminal, according to an embodiment of the present invention; and
FIG. 13B is a diagram illustrating an example of outputting advertising information in a mobile terminal, according to an embodiment of the present invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions processes known in the art may be omitted to avoid obscuring the subject matter of the present invention.

Embodiments of the present invention provide an advertisement providing apparatus and method for recording advertising audio signals output from various advertising media such as TVs, PCs and radios, on a mobile device, and providing advertising information using the recorded advertising audio data.

In accordance with an embodiment of the present invention, the advertisement providing apparatus may be, for example, a mobile terminal or the like, and may record advertising audio signals and request advertising information corresponding to the recorded advertising audio data. In response, an advertising server provides advertising information corresponding to the advertising audio data recorded in the mobile terminal, to the mobile terminal. In addition, embodiments of the present invention provide a billing server for billing of the provided advertising information.

In an embodiment of the present invention, the advertising audio signals may be audio signals included in advertisements output from advertising media such as TVs, PCs and radios, and the advertising audio signals may include any audio signal representing the advertisements, regardless of the advertising media.

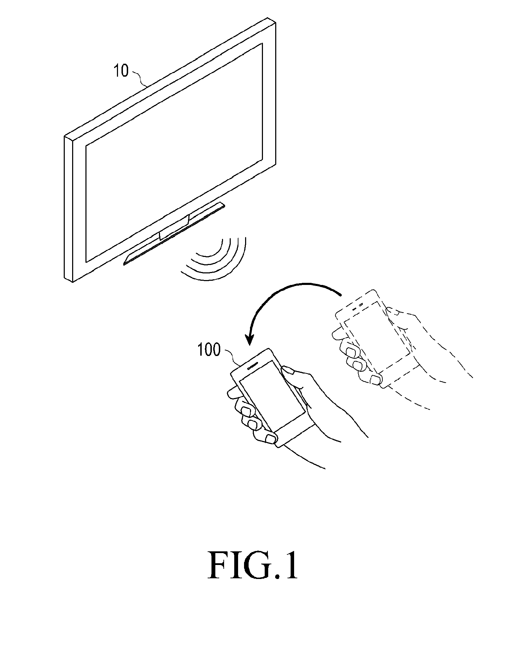

FIG. 1 is a diagram illustrating a method for providing advertisements using motion recognition in a mobile terminal, according to an embodiment of the present invention. Referring to FIG. 1, if a user of a mobile terminal 100 shakes or moves the mobile terminal 100 while advertising audio signals are output from an advertising medium 10, such as a TV, the mobile terminal 100 recognizes a predetermined motion, and records advertising audio signals as the motion is recognized. In an alternative embodiment of the present invention, the mobile terminal 100 may record advertising audio signals depending on user inputs (for example, touch inputs or keypad inputs by the user) instead of the motion recognition. The mobile terminal 100 receives advertising information corresponding to the recorded advertising audio signals from an advertising server, and outputs or provides the received advertising information.

Accordingly, if the user desires to get detailed information or additional information about an advertisement while watching the advertisement on the advertising medium 10, such as a TV, the user may make a motion or make a user input for an advertisement request using the mobile terminal 100, to receive the detailed information or additional information about the advertisement.

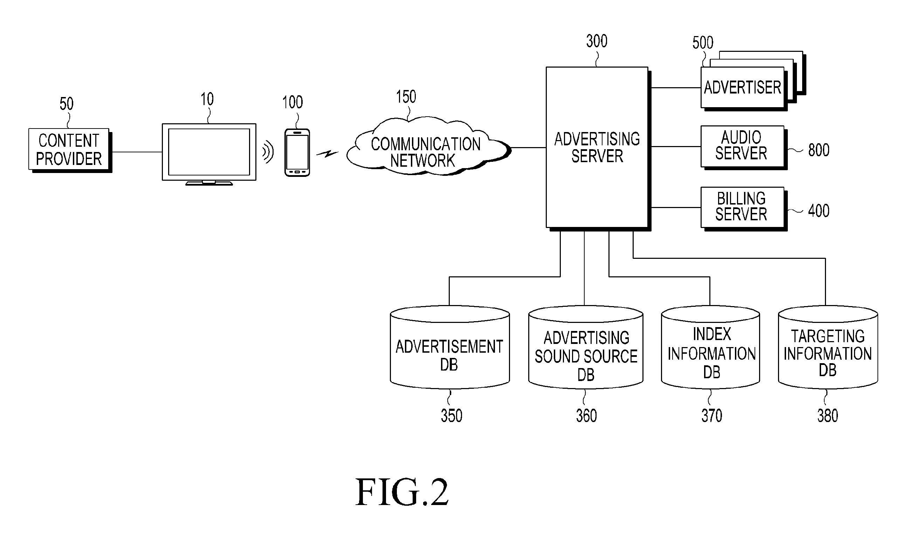

Reference will be made to a structure of an advertisement providing apparatus for providing advertisements, according to an embodiment of the present invention. FIG. 2 is a diagram illustrating a configuration of an advertisement providing system, according to an embodiment of the present invention.

Referring to FIG. 2, a content provider 50 provides advertising content. The advertising content may include audio advertisements. The content provider 50 may receive advertising content from an advertising server 300 and transmit the advertising content to an advertising medium 10.

The advertising medium 10 is an advertising medium for receiving advertising content, including audio signals from the content provider 50, and for outputting the received advertising content. The advertising medium 10 may include any device capable of outputting audio signals, such as a TV, a PC or a radio.

A mobile terminal 100 records the advertising audio signals output by the advertising medium 10, stores the advertising audio signals as advertising audio data, and provides the advertising audio data to the advertising server 300. The mobile terminal 100 may provide targeting purpose data to the advertising server 300 together with the audio data. The targeting purpose data may include at least one of terminal information, user information and location information. The terminal information may include at least one of a device Identifier (ID), a model number, a manufacturer, Operating System (OS) information, International Mobile Station Equipment Identity (IMEI) information (or terminal identification information), and Identifier For Advertisers (IDFA) information (or an anonymous number assigned to a terminal or a user) of the mobile terminal 100. The user information may include at least one of a user gender, a user age, and a user address for a user of the mobile terminal 100. The location information may include at least one of Media Access Control (MAC) address information, a Cell-ID, and Global Positioning System (GPS) information for the mobile terminal 100. The mobile terminal 100 receives advertising information from the advertising server 300 over a communication network 150, and outputs the advertising information. For example, the mobile terminal 100 may display an advertising screen corresponding to the received advertising information, or may output advertising audio signals corresponding to the received advertising information. In this way, the mobile terminal 100 may provide the advertising information to the user. At the same time, the mobile terminal 100 provides the advertisement provision results to a billing server 400 so that the billing server 400 may bill for the provided advertisement.

The advertising server 300 receives advertising information provided by one or more advertisers 500, and stores the advertising information in an advertisement Database (DB) 350. The advertising server 300 receives advertising audio data from the mobile terminal 100 over the communication network 150, or receives targeting purpose data together with the advertising audio data, receives advertising information corresponding to the advertising audio data, or advertising information corresponding to the advertising audio data and the targeting information from the advertisement DB 350, and provides them to the mobile terminal 100. Like the mobile terminal 100, the advertising server 300 may also provide the advertisement provision results to the billing server 400 so that the billing server 400 may bill for the provided advertisement.

The advertisement DB 350 stores advertising information for the advertisements that the one or more advertisers 500 desire to advertise. The advertising information may include advertising data (for example, advertising data for representing advertisements, such as video, photo, text, web site address, URL information and Application information used to represent the content of each advertisement), advertisement categories, advertisement keywords, and similar keywords and recommended keywords for the advertisement keywords. The advertisement DB 350 provides advertising data corresponding to keyword or index information, or corresponding to an advertising sound source, to the advertising server 300. If there is no advertising data corresponding to the keyword, the advertisement DB 350 provides a similar keyword corresponding to an advertisement category, to which the keyword belongs, to the advertising server 300.

An advertising sound source DB 360 stores advertising sound sources for at least one advertisement. The term 'advertising sound source', as used herein, may refer to a sound source corresponding to some or all of audio included in a certain advertisement. The advertising sound source DB 360 may store an advertising sound source in association with advertiser information of the advertisement, may store an advertising sound source in association with an advertising title of the advertisement, or may store an advertising sound source in association with content of the advertisement.

An index information DB 370 stores index information for at least one advertisement. The term 'index information', as used herein, may refer to index information provided to distinguish or identify audio data corresponding to a certain advertisement. The index information DB 370 may store index information in association with advertiser information, an advertising title or content of the advertisement.

A targeting information DB 380 stores targeting information for at least one advertisement. The term 'targeting information', as used herein, may refer to information about a target to which an advertisement provider will provide advertisements. For example, in an embodiment of the present invention, based on the targeting purpose data (i.e., at least one of terminal information, user information and location information), it is possible to determine to which target the mobile terminal 100 or its device user belongs, and this information may be targeting information. For example, if the terminal information and the user information represent a female user in her 20's using a smart phone, the targeting information may be information indicating the advertisement(s) targeting smart phones and/or women in their 20's. The targeting information DB 380 extracts targeting information corresponding to the device ID and user information from among the targeting information stored in advance, and provides the extracted targeting information to the advertising server 300.

The billing server 400 stores billing policy information associated with an advertising information provision, and bills for the advertising information provision depending on the billing policy information. For example, the billing server 400 stores different billing policy information depending on whether the user has received the advertisement through motion recognition or through user input, and then bills for the advertising information provision depending on the billing policy information.

A method for providing advertisements using motion recognition in the above-described advertisement providing apparatus is described in greater detail below. In accordance with embodiments of the present invention, the method for providing advertisements using motion recognition may be implemented in various different ways. The first through seventh embodiments of the present invention are described in detail below.

In an advertisement providing method according to the first embodiment of the present invention, if the mobile terminal 100 records advertising audio output from the advertising medium 10 and transmits the advertising audio to the advertising server 300, then the advertising server 300 receives advertising audio data, extracts advertising sound source corresponding to the advertising audio data, and provides advertising information corresponding to the advertising sound source to the mobile terminal 100.

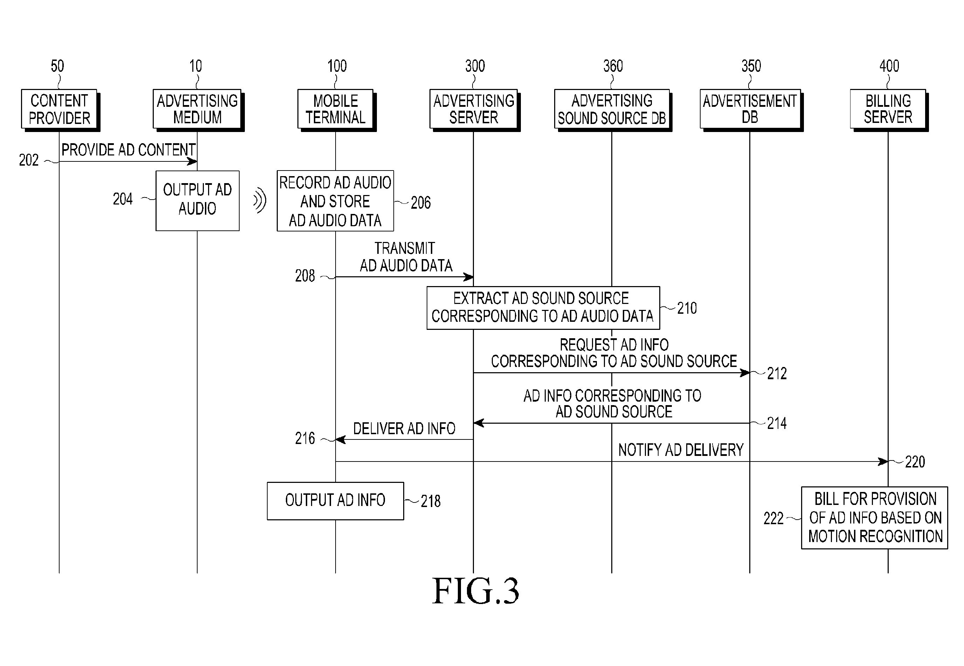

FIG. 3 is a diagram illustrating an advertisement providing method, according to a first embodiment of the present invention.

Referring to FIG. 3, the content provider 50 provides advertising content to the advertising medium 10, in step 202. In step 204, the advertising medium 10 outputs advertising audio included in the advertising content provided from the content provider 50.

In step 206, the mobile terminal 100 records advertising audio output from the advertising medium 10, and stores the recorded advertising audio data.

For example, the mobile terminal 100 may determine whether a predetermined motion is recognized on a standby screen. If the predetermined motion is recognized, the mobile terminal 100 may record advertising audio signals by executing an advertising application for providing advertisements.

In another example, the mobile terminal 100 may determine whether a predetermined motion is recognized, while an advertising application is being executed. If the predetermined motion is recognized, the mobile terminal 100 may record advertising audio signals.

In a further example, the mobile terminal 100 may determine whether a predetermined motion is recognized, by executing an advertising application depending on a user input such as a key input or a touch input. If the predetermined motion is recognized, the mobile terminal 100 may record advertising audio signals.

After recording the advertising audio signals, the mobile terminal 100 transmits the recorded advertising audio data to the advertising server 300, in step 208.

In accordance with an embodiment of the present invention, the mobile terminal 100 may convert the recorded advertising audio signals into advertising audio signals in a frequency band by Fast Fourier Transform (FFT)-performing the recorded advertising audio signals at intervals of a predetermined time unit (for example, 10 seconds). The mobile terminal 100 may encode the converted advertising audio signals using a Hash function, compress the encoded advertising audio data using a BASE64 compression scheme, and transmit the encoded and compressed advertising audio data to the advertising server 300. In accordance with another embodiment of the present invention, the mobile terminal 100 may directly transmit advertising audio data representing waveforms of the recorded advertising audio signals, to the advertising server 300.

Upon receiving the advertising audio data, the advertising server 300 extracts an advertising sound source corresponding to the advertising audio data from the advertising sound source DB 360, which stores at least one advertising sound source, in step 210. In accordance with an embodiment of the present invention, upon receiving the encoded and compressed advertising audio data from the mobile terminal 100, the advertising server 300 may decompress the encoded and compressed advertising audio data, decode (or restore) the decompressed advertising audio data into advertising audio signals, and then extract an advertising sound source corresponding to the decoded advertising audio signals from the advertising sound source DB 360. In accordance with another embodiment of the present invention, upon receiving waveforms of advertising audio signals from the mobile terminal 100, the advertising server 300 may extract an advertising sound source corresponding to the waveforms of the advertising audio signals, from the advertising sound source DB 360.

If an advertising sound source is extracted, the advertising server 300 requests advertising information corresponding to the advertising sound source from the advertisement DB 350, in step 212. The advertising server 300 may request advertising information corresponding to advertiser information or an advertising title for the advertising sound source.

In step 214, the advertisement DB 350 provides advertising information corresponding to the advertising sound source to the advertising server 300. The advertisement DB 350 may provide advertising information matched to the advertiser information for the advertising sound source to the advertising server 300, or may provide advertising information matched to the advertising title for the advertising sound source to the advertising server 300.

In step 216, the advertising server 300 receives the advertising information provided from the advertisement DB 350, and delivers the received advertising information to the mobile terminal 100.

Upon receiving the advertising information from the advertising server 300, the mobile terminal 100 outputs the advertising information in step 218. For example, the mobile terminal 100 outputs video, photo, text, web site address, URL information, Application information, and the like, corresponding to the received advertising information, thereby providing the advertising information to the user.

After providing the advertising information, the mobile terminal 100 notifies the billing server 400 of its provision of advertising information to the user, in step 220. As another example, after the advertising server 300 provides the advertising information to the mobile terminal 100, the advertising server 300 may notify the billing server 400 of its provision of advertising information to the mobile terminal 100. In step 222, the billing server 400 bills for the advertisement provision to the mobile terminal 100. The billing server 400 may perform billing in accordance with a different billing policy depending on the provision method, such as whether the advertisement has been provided by motion recognition or by user input.

In accordance with the second embodiment of the present invention, if the mobile terminal 100 records advertising audio output from the advertising medium 10 and transmits the recorded advertising audio to the advertising server 300, the advertising server 300 receives the advertising audio data, extracts a keyword corresponding to the advertising audio data, and provides advertising information corresponding to the keyword to the mobile terminal 100.

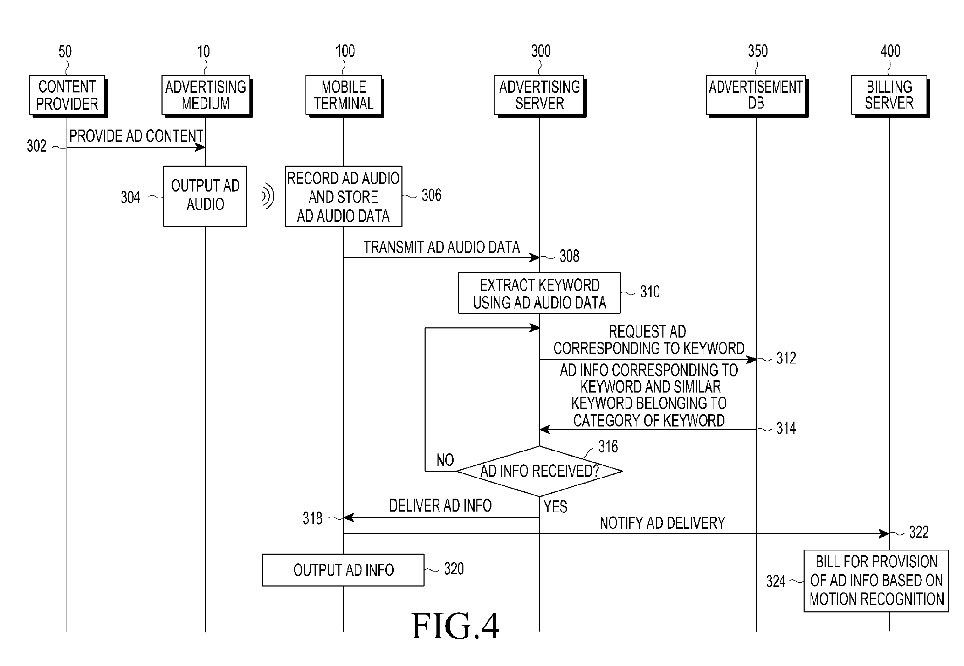

FIG. 4 is a diagram illustrating an advertisement providing method, according to a second embodiment of the present invention.

Referring to FIG. 4, the content provider 50 provides advertising content to the advertising medium 10, in step 302. In step 304, the advertising medium 10 outputs advertising audio included in the advertising content provided from the content provider 50.

In step 306, the mobile terminal 100 records the advertising audio output from the advertising medium 10, and stores the recorded advertising audio data.

For example, the mobile terminal 100 may determine whether a predetermined motion is recognized on a standby screen. If the predetermined motion is recognized, the mobile terminal 100 may record advertising audio signals by executing an advertising application for providing advertisements.

In another example, the mobile terminal 100 may determine whether a predetermined motion is recognized, while an advertising application is being executed. If the predetermined motion is recognized, the mobile terminal 100 may record advertising audio signals.

In a further example, the mobile terminal 100 may determine whether a predetermined motion is recognized, by executing an advertising application depending on a user input such as a key input or a touch input. If the predetermined motion is recognized, the mobile terminal 100 may record advertising audio signals.

After recording the advertising audio signals, the mobile terminal 100 transmits the recorded advertising audio data to the advertising server 300 in step 308.

Upon receiving the advertising audio data, the advertising server 300 extracts a keyword using the advertising audio data in step 310. The advertising server 300 converts the advertising audio data into text data and extracts a keyword for advertisement search from the converted text data.

After detecting a keyword, the advertising server 300 requests advertising information corresponding to the keyword from the advertisement DB 350, in step 312.

In step 314, the advertisement DB 350 provides advertising information corresponding to the keyword or a similar keyword corresponding to the keyword. Specifically, in accordance with an embodiment of the present invention, the advertisement DB 350 stores advertising information for the advertisements that at least one advertiser 500 desires to advertise. The advertising information may include advertising data (for example, advertising data for representing advertisements, such as video, photo, text web site address, URL information and Application information used to represent the content of each advertisement), advertisement categories, advertisement keywords, and similar keywords and recommended keywords for the advertisement keywords. The advertisement DB 350 provides advertising data corresponding to the keyword to the advertising server 300. If there is no advertising data corresponding to the keyword, the advertisement DB 350 provides a similar keyword corresponding to an advertisement category, to which the keyword belongs, to the advertising server 300.

The advertising server 300 determines, in step 316, whether advertising information is provided from the advertisement DB 350. If a similar keyword belonging to the advertisement category, instead of the advertising information, is received, the advertising server 300 returns to step 312 and requests advertising information corresponding to the keyword.

However, upon receiving the advertising information, the advertising server 300 delivers the advertising information to the mobile terminal 100, in step 318. Upon receiving the advertising information from the advertising server 300, the mobile terminal 100 outputs the advertising information, in step 320. For example, the mobile terminal 100 outputs video, photo, text, web site address, URL information, application information, and the like, corresponding to the received advertising information, thereby providing the advertising information to the user.

After providing the advertising information, the mobile terminal 100 notifies the billing server 400 of its provision of advertising information to the user, in step 322. As another example, after the advertising server 300 provides the advertising information to the mobile terminal 100, the advertising server 300 may notify the billing server 400 of its provision of advertising information to the mobile terminal 100. In step 324, the billing server 400 bills for the advertisement provision based on motion recognition of the mobile terminal 100. The billing server 400 may perform billing in accordance with a different billing policy depending on the provision method, such as whether the advertisement has been provided by motion recognition or by user input.

In accordance with the third embodiment of the present invention, if the mobile terminal 100 records advertising audio output from the advertising medium 10 and transmits the recorded advertising audio to the advertising server 300, the advertising server 300 receives advertising audio data, detects index information corresponding to the advertising audio data and provides advertising information corresponding to the index information to the mobile terminal 100.

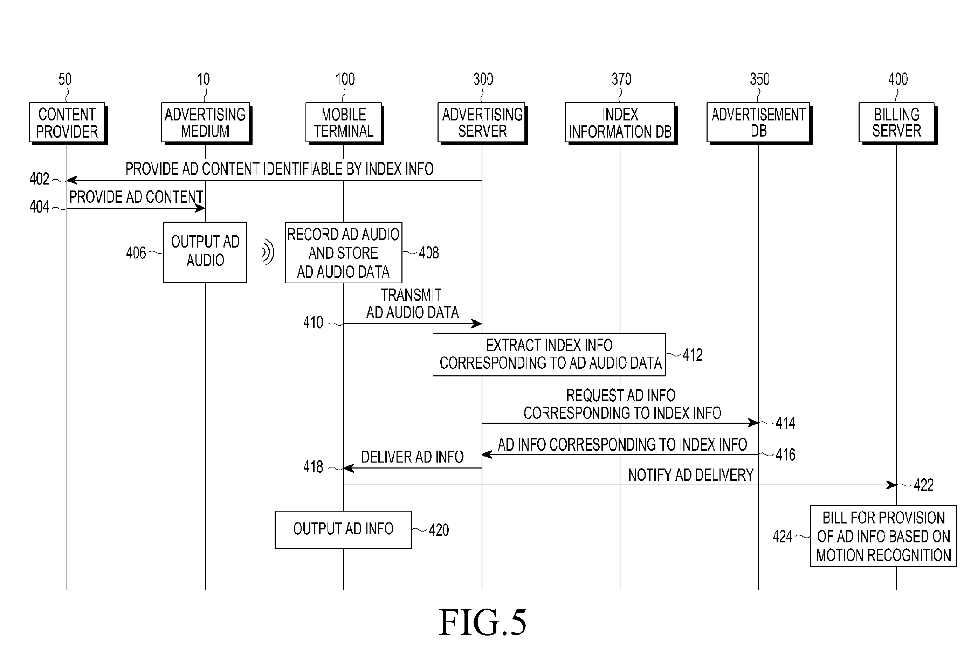

FIG. 5 is a diagram illustrating an advertisement providing method, according to a third embodiment of the present invention.

Referring to FIG. 5, the advertising server 300 provides advertising content, including an advertisement(s), which can be distinguished or identified with an advertising index, to the content provider 50, in step 402.

In step 404, the content provider 50 provides the advertising content to the advertising medium 10. In step 406, the advertising medium 10 outputs advertising audio included in the advertising content provided from the content provider 50.

In step 408, the mobile terminal 100 records the advertising audio output from the advertising medium 10, and stores the recorded advertising audio data.

For example, the mobile terminal 100 may determine whether a predetermined motion is recognized on a standby screen. If the predetermined motion is recognized, the mobile terminal 100 may record advertising audio signals by executing an advertising application for providing advertisements.

In another example, the mobile terminal 100 may determine whether a predetermined motion is recognized, while an advertising application is being executed. If the predetermined motion is recognized, the mobile terminal 100 may record advertising audio signals.

In a further example, the mobile terminal 100 may determine whether a predetermined motion is recognized, by executing an advertising application depending on a user input such as a key input or a touch input. If the predetermined motion is recognized, the mobile terminal 100 may record advertising audio signals.

After recording the advertising audio signals, the mobile terminal 100 transmits the recorded advertising audio data to the advertising server 300, in step 410.

Upon receiving the advertising audio data, the advertising server 300 extracts index information corresponding to the advertising audio data from the index information DB 370 storing information about at least one index, in step 412. In accordance with an embodiment of the present invention, upon receiving the encoded and compressed advertising audio data from the mobile terminal 100, the advertising server 300 may decompress the encoded and compressed advertising audio data, decode (or restore) the decompressed advertising audio data into advertising audio signals, and then extract index information corresponding to the decoded advertising audio signals from the index information DB 370. In accordance with another embodiment of the present invention, upon receiving waveforms of advertising audio signals from the mobile terminal 100, the advertising server 300 may extract index information corresponding to the waveforms of the advertising audio signals, from the index information DB 370.

If the index information is extracted, the advertising server 300 requests advertising information corresponding to the index information from the advertisement DB 350, in step 414. In step 416, the advertisement DB 350 provides advertising information corresponding to the advertising index, to the advertising server 300. The advertisement DB 350 may provide advertising information matched to advertiser information for the advertising index to the advertising server 300, or may provide advertising information matched to an advertising title for the advertising index to the advertising server 300.

In step 418, the advertising server 300 receives the advertising information provided from the advertisement DB 350, and delivers the received advertising information to the mobile terminal 100.

Upon receiving the advertising information from the advertising server 300, the mobile terminal 100 outputs the advertising information, in step 420. For example, the mobile terminal 100 outputs video, photo, text, web site address, URL information, application information, and the like, corresponding to the received advertising information, thereby providing the advertising information to the user.

After providing the advertising information, the mobile terminal 100 notifies the billing server 400 of its provision of advertising information to the user, in step 422. As another example, after the advertising server 300 provides the advertising information to the mobile terminal 100, the advertising server 300 may notify the billing server 400 of its provision of advertising information to the mobile terminal 100. In step 424, the billing server 400 bills for the advertisement provision to the mobile terminal 100. The billing server 400 may perform billing in accordance with a different billing policy depending on the provision method, such as whether the advertisement has been provided by motion recognition or by user input.

In accordance with the fourth embodiment of the present invention, if the mobile terminal 100 transmits index information, corresponding to targeting purpose data and advertising audio data, to the advertising server 300, the advertising server 300 provides targeting information corresponding to the targeting purpose data and advertising information corresponding to the index information, to the mobile terminal 100.

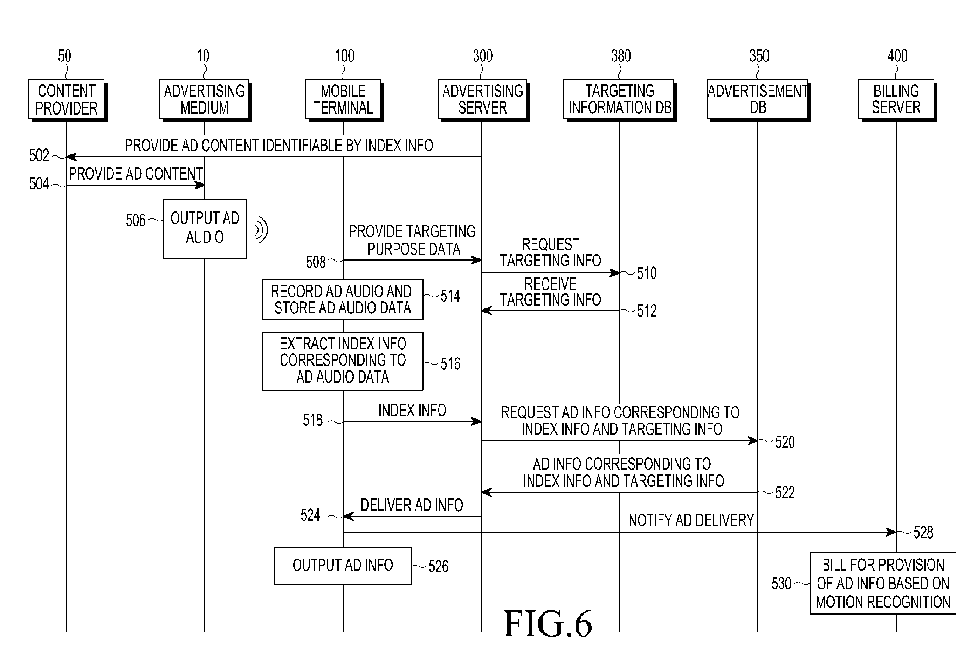

FIG. 6 is a diagram illustrating an advertisement providing method, according to a fourth embodiment of the present invention.

Referring to FIG. 6, the advertising server 300 provides advertising content including advertising audio, which can be distinguished or identified with index information, to the content provider 50, in step 502.

In step 504, the content provider 50 provides the advertising content to the advertising medium 10. In step 506, the advertising medium 10 outputs the advertising audio included in the advertising content provided from the content provider 50.

In step 508, upon receiving a motion corresponding to an advertisement request for the advertising audio signals, the mobile terminal 100 recognizes the motion and transmits targeting purpose data to the advertising server 300 depending on the motion recognition results, in order for the advertising server 300 to collect targeting information corresponding to targeting purpose data in advance. The term 'targeting information', as used herein, may refer to information about a target to which an advertisement provider will provide advertisements. For example, in an embodiment of the present invention, based on the targeting purpose data including at least one of terminal information, user information and location information, it is possible to determine to which target the mobile terminal 100 or its device user belongs, and this information may be targeting information.

For example, the mobile terminal 100 may determine whether a predetermined motion is recognized on a standby screen. If the predetermined motion is recognized, the mobile terminal 100 may transmit targeting purpose data to the advertising server 300.

In another example, the mobile terminal 100 may determine whether a predetermined motion is recognized, while an advertising application is being executed. If the predetermined motion is recognized, the mobile terminal 100 may transmit targeting purpose data to the advertising server 300.

In a further example, the mobile terminal 100 may determine whether a predetermined motion is recognized, by executing an advertising application depending on a user input such as a key input or a touch input. If the predetermined motion is recognized, the mobile terminal 100 may transmit targeting purpose data to the advertising server 300.

Upon receiving the targeting purpose data used to collect targeting information, the advertising server 300 requests targeting information corresponding to the targeting purpose data from the targeting information DB 380, in step 510.

In response, the targeting information DB 380 extracts targeting information corresponding to the targeting purpose data (i.e., at least one of terminal information, user information and location information) from among the targeting information stored in advance, and provides the targeting information to the advertising server 300, in step 512.

After providing the targeting purpose data to enable the advertising server 300 to collect targeting information, the mobile terminal 100 records advertising audio output from the advertising medium 10 and stores the recorded advertising audio data in step 514.

The mobile terminal 100 extracts index information corresponding to the advertising audio data in step 516, and transmits the extracted index information to the advertising server 300, in step 518. The term 'index information', as used herein, may refer to index information provided to distinguish or identify audio data corresponding to a certain advertisement. The mobile terminal 100 may store the index information in association with at least one of an advertising title, advertiser information and content for the advertisement. For example, the index information represents identification information used to map an advertisement to its advertising audio data, and may be of the type SOUND ID, Advertisement ID, and the like. The type of the index information may include any information used to map an advertisement to its advertising audio data, as well as the SOUND ID and the Advertisement ID.

Upon receiving index information corresponding to the targeting information and the advertising audio data, the advertising server 300 requests advertising information corresponding to the index information and the targeting information from the advertisement DB 350, in step 520.

In step 522, the advertisement DB 350 searches for advertising information corresponding to the index information and the targeting information, and provides the advertising information.

In step 524, the advertising server 300 provides the advertising information provided from the advertisement DB 350 to the mobile terminal 100.

Upon receiving the advertising information from the advertising server 300, the mobile terminal 100 outputs the advertising information, in step 526. For example, the mobile terminal 100 outputs video, photo, text, web site address, URL information, application information, and the like, corresponding to the received advertising information, thereby providing the advertising information to the user.

After providing the advertising information, the mobile terminal 100 notifies the billing server 400 of its provision of advertising information to the user, in step 528. As another example, after the advertising server 300 provides the advertising information to the mobile terminal 100, the advertising server 300 may notify the billing server 400 of its provision of advertising information to the mobile terminal 100. In step 530, the billing server 400 bills for the advertisement provision to the mobile terminal 100 in accordance with a predetermined billing policy. The billing server 400 may perform billing in accordance with a different billing policy depending on the provision method, such as whether the advertisement has been provided by motion recognition or by user input.

In accordance with the fifth embodiment of the present invention, if the mobile terminal 100 transmits targeting purpose data and advertising audio data to the advertising server 300, the advertising server 300 may acquire targeting information using the targeting purpose data, extract index information corresponding to advertising audio data, and provide advertising information corresponding to the targeting information and the index information, to the mobile terminal 100.

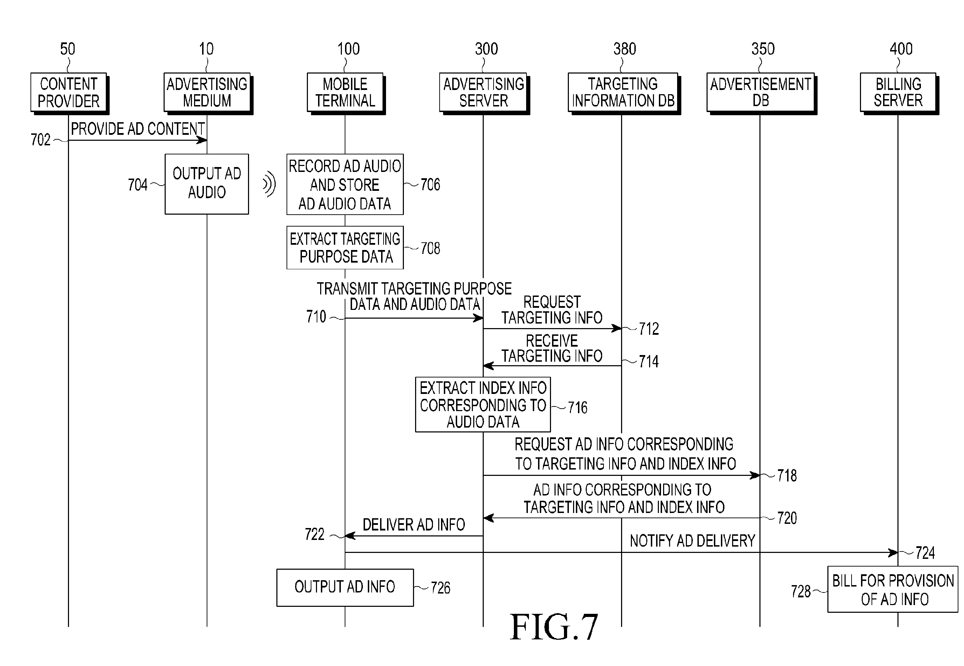

FIG. 7 is a diagram illustrating an advertisement providing method, according to a fifth embodiment of the present invention.

Referring to FIG. 7, the content provider 50 provides advertising content to the advertising medium 10, in step 702. In step 704, the advertising medium 10 outputs advertising audio included in the advertising content provided from the content provider 50.

In step 706, upon detecting a user input or a motion corresponding to an advertisement request for the advertising audio signals, the mobile terminal 100 records advertising audio and stores the recorded advertising audio data.

In step 708, the mobile terminal 100 extracts targeting purpose data. The targeting purpose data may include at least one of terminal information, user information and location information. The terminal information may include at least one of a device ID, a model number, a manufacturer, OS information, IMEI information (or terminal identification information), and IDFA information (or an anonymous number assigned to a terminal or a user) of the mobile terminal 100. The user information may include at least one of a user gender, a user age, and a user address for a user of the mobile terminal 100. The location information may include at least one of MAC address information, a Cell-ID, and GPS information for the mobile terminal 100.

In step 710, the mobile terminal 100 transmits the audio data and the targeting purpose data to the advertising server 300.

For example, the mobile terminal 100 may determine whether a predetermined motion is recognized on a standby screen. If the predetermined motion is recognized, the mobile terminal 100 may transmit the audio data and the targeting purpose data to the advertising server 300.

In another example, the mobile terminal 100 may determine whether a predetermined motion is recognized, while an advertising application is being executed. If the predetermined motion is recognized, the mobile terminal 100 may transmit the audio data and the targeting purpose data to the advertising server 300.

In a further example, the mobile terminal 100 may determine whether a predetermined motion is recognized, by executing an advertising application depending on a user input such as a key input or a touch input. If the predetermined motion is recognized, the mobile terminal 100 may transmit the audio data and the targeting purpose data to the advertising server 300.

Upon receiving the targeting purpose data and the audio data, the advertising server 300 requests targeting information corresponding to the targeting purpose data from the targeting information DB 380, in step 712, and receives the targeting information, in step 714. In response to the request, the targeting information DB 380 may extract targeting information corresponding to the targeting purpose data (i.e., at least one of terminal information, user information and location information) from among the targeting information stored in advance, and provide the targeting information to the advertising server 300.

In step 716, the advertising server 300 extracts index information corresponding to the advertising audio data. The term 'index information', as used herein, may refer to index information provided to distinguish or identify audio data corresponding to a certain advertisement. The advertising server 300 may store the index information in association with at least one of an advertising title, advertiser information and content for the advertisement. For example, the index information represents identification information used to map an advertisement to its advertising audio data, and may have the type of SOUND ID, Advertisement ID and the like. The type of the index information may include any information used to map an advertisement to its advertising audio data, as well as the SOUND ID and the Advertisement ID.

The advertising server 300 requests advertising information corresponding to the targeting information and the index information from the advertisement DB 350, in step 718, and receives advertising information corresponding to the targeting information and the index information, in step 720. In another example, the advertising server 300 may directly search the advertisement DB 350 for advertising information corresponding to the targeting information and the index information, to obtain the advertising information.

In step 722, the advertising server 300 delivers the advertising information received or searched from the advertisement DB 350, to the mobile terminal 100.

Upon receiving the advertising information from the advertising server 300, the mobile terminal 100 outputs the advertising information, in step 726. For example, the mobile terminal 100 outputs video, photo, text, web site address, URL information, application information, and the like, corresponding to the received advertising information, thereby providing the advertising information to the user.

After providing the advertising information, the mobile terminal 100 notifies the billing server 400 of its provision of advertising information to the user, in step 724. In another example, after the advertising server 300 provides the advertising information to the mobile terminal 100, the advertising server 300 may notify the billing server 400 of its provision of advertising information to the mobile terminal 100. In step 728, the billing server 400 bills for the advertisement provision to the mobile terminal 100 in accordance with a predetermined billing policy. The billing server 400 may perform billing in accordance with a different billing policy depending on the provision method, such as whether the advertisement has been provided by motion recognition or by user input.

In accordance with the sixth embodiment of the present invention, if the mobile terminal 100 receives index information corresponding to advertising audio data from a separate audio server 800 and provides the targeting purpose data and the index information to the advertising server 300, the advertising server 300 provides advertising information corresponding to the targeting information and the index information to the mobile terminal 100.

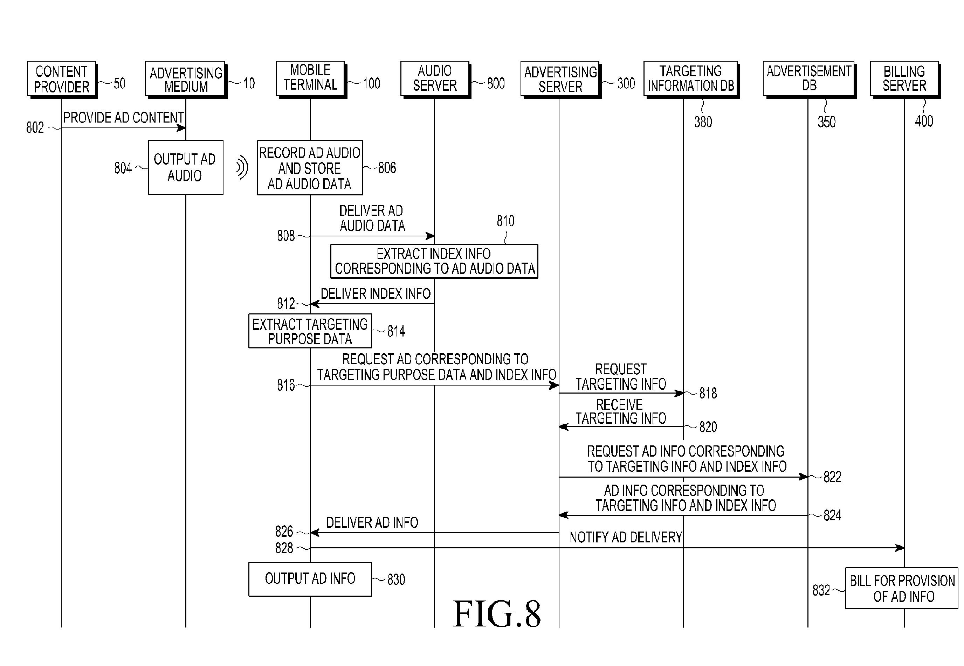

FIG. 8 is a diagram illustrating an advertisement providing method, according to a sixth embodiment of the present invention.

Referring to FIG. 8, the content provider 50 provides advertising content to the advertising medium 10, in step 802. In step 704, the advertising medium 10 outputs advertising audio included in the advertising content provided from the content provider 50.

In step 806, upon detecting a user input or a motion corresponding to an advertisement request for the advertising audio signals, the mobile terminal 100 records advertising audio and stores the recorded advertising audio data.

In step 808, the mobile terminal 100 transmits advertising audio data to the audio server 800, which is different from the advertising server 300. The audio server 800 may store index information corresponding to advertising audio data and provide the stored index information. In step 812, the mobile terminal 100 receives index information from the audio server 800.

The mobile terminal 100 extracts the targeting purpose data, in step 814, and requests advertising information corresponding to the extracted targeting purpose data and the index information from the advertising server 300, in step 816.

Upon receiving the request for advertising information corresponding to the targeting purpose data and the index information, the advertising server 300 requests targeting information corresponding to the targeting purpose data from the targeting information DB 380, in step 818, and receives targeting information corresponding to the targeting purpose data from the targeting information DB 380, in step 820.

In response to the request, the targeting information DB 380 may extract targeting information corresponding to the targeting purpose data (i.e., at least one of terminal information, user information and location information) from among the targeting information stored in advance, and provide the targeting information to the advertising server 300.

The terminal information may include at least one of a device ID, a model number, a manufacturer, OS information, IMEI information (or terminal identification information), and IDFA information (or an anonymous number assigned to a terminal or a user) of the mobile terminal 100. The user information may include at least one of a user gender, a user age, and a user address for a user of the mobile terminal 100. The location information may include at least one of MAC address information, a Cell-ID, and GPS information for the mobile terminal 100.

Upon receiving the targeting information, the advertising server 300 requests advertising information corresponding to the targeting information and the index information from the advertisement DB 350, in step 822, and receives the advertising information corresponding to the targeting information and the index information from the advertisement DB 350, in step 824. In another example, the advertising server 300 may directly search the advertisement DB 350 for advertising information corresponding to the targeting information and the index information, to obtain the advertising information.

In step 826, the advertising server 300 delivers the advertising information received or searched from the advertisement DB 350, to the mobile terminal 100.

Upon receiving the advertising information from the advertising server 300, the mobile terminal 100 outputs the advertising information, in step 830. For example, the mobile terminal 100 outputs video, photo, text, web site address, URL information, application information, and the like, corresponding to the received advertising information, thereby providing the advertising information to the user.

In step 828, the mobile terminal 100 notifies the billing server 400 of its provision of advertising information to the user. In another example, after the advertising server 300 provides the advertising information to the mobile terminal 100, the advertising server 300 may notify the billing server 400 of its provision of advertising information to the mobile terminal 100. In step 832, the billing server 400 bills for the advertisement provision to the mobile terminal 100, in accordance with a predetermined billing policy. The billing server 400 may perform billing in accordance with a different billing policy depending on the provision method, such as whether the advertisement has been provided by motion recognition or by user input.

In accordance with the seventh embodiment of the present invention, the mobile terminal 100 may acquire broadcast information for audio signals it desires to record, and obtain index information corresponding to advertising audio data using the broadcast information.

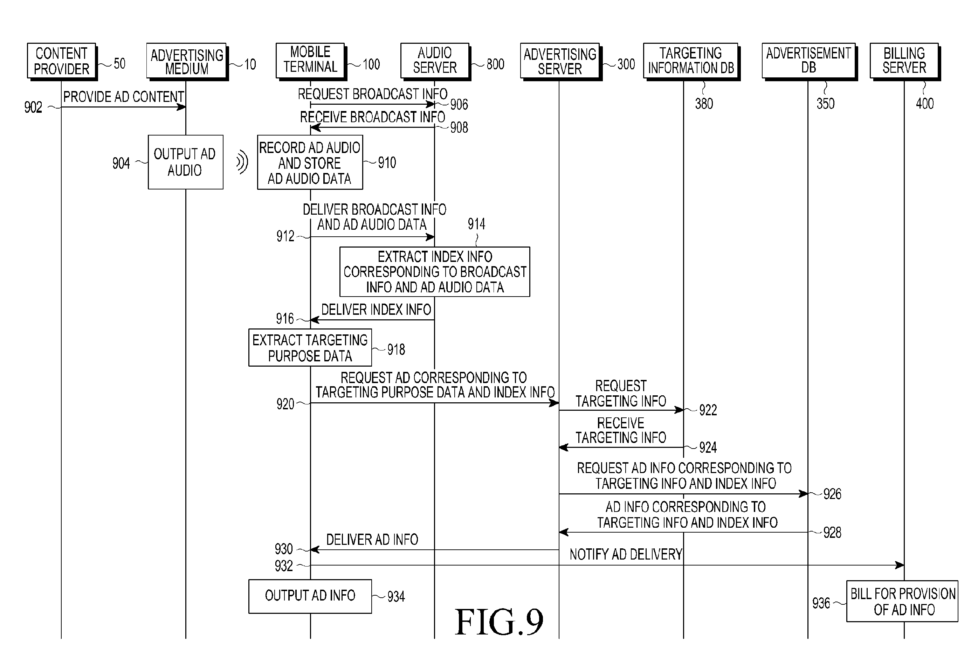

FIG. 9 is a diagram illustrating a procedure for an advertisement providing method, according to a seventh embodiment of the present invention.

Referring to FIG. 9, the content provider 50 provides advertising content to the advertising medium 10, in step 902. In step 904, the advertising medium 10 outputs advertising audio included in the advertising content, provided from the content provider 50.

The user may request broadcast information for the advertising content output from the advertising medium 10, using the mobile terminal 100. The term 'broadcast information' as used herein may refer to information indicating which advertising content is broadcasted on the advertising medium 10. For example, if the advertising medium 10 is a TV, the broadcast information may include a name and a broadcast time of a TV program, a name and a broadcast time of a TV advertisement, and the like. Specifically, the user may request information about the advertising content presently being broadcasted on the advertising medium 10, by inputting a predetermined broadcast information request to the mobile terminal 100. The inputting of a predetermined broadcast information request may include inputting the request using a predetermined motion or a user input unit.

Upon receiving a broadcast information request by the user, the mobile terminal 100 requests broadcast information from the separate audio server 800, in step 906, and receives broadcast information from the audio server 800, in step 908. Although it is assumed in the seventh embodiment of the present invention that the audio server 800 provides broadcast information, the content provider 50 may provide broadcast information, or the advertising medium 10 may also provide broadcast information, if it has the broadcast information. A separate broadcast receiver may also provide the broadcast information. Broadcast information for a predetermined time may be provided, or broadcast information for a requested time may be provided. Upon receiving the broadcast information, the mobile terminal 100 may output the broadcast information, allowing the user to know broadcast information about the advertising audio included in the advertising content output from the advertising medium 10.

In step 910, the mobile terminal 100 records advertising audio and stores the recorded advertising audio data. In step 912, the mobile terminal 100 delivers broadcast information corresponding to the recorded audio data and the advertising audio data from among the broadcast information, to the audio server 800.

The audio server 800 extracts index information corresponding to the advertising audio data and the broadcast information in step 914, and delivers the index information to the mobile terminal 100 in step 916. The term 'index information', as used herein, may refer to index information provided to distinguish or identify audio data corresponding to a certain advertisement. For example, the index information extracted by the audio server 800 represents identification information used to map an advertisement to its broadcast information and advertising audio data, and may have the type of SOUND ID, Advertisement ID and the like. The type of the index information may include any information used to map an advertisement to its broadcast information and advertising audio data, as well as the SOUND ID and the Advertisement ID.

Upon receiving the index information, the mobile terminal 100 extracts targeting purpose data, in step 918, and request an advertisement corresponding to the targeting purpose data and the index information from the advertising server 300, in step 920.

Upon receiving the request for advertising information corresponding to the targeting purpose data and the index information, the advertising server 300 requests targeting information corresponding to the targeting purpose data from the targeting information DB 380, in step 922, and receives targeting information corresponding to the targeting purpose data from the targeting information DB 380, in step 924.

In response to the request, the targeting information DB 380 may extract targeting information corresponding to the targeting purpose data (i.e., at least one of terminal information, user information and location information) from among the targeting information stored in advance, and provide the targeting information to the advertising server 300.

The terminal information may include at least one of a device ID, a model number, a manufacturer, OS information, IMEI information (or terminal identification information), and IDFA information (or an anonymous number assigned to a terminal or a user) of the mobile terminal 100. The user information may include at least one of a user gender, a user age, and a user address for a user of the mobile terminal 100. The location information may include at least one of MAC address information, a Cell-ID, and GPS information for the mobile terminal 100.

Upon receiving the targeting information, the advertising server 300 requests advertising information corresponding to the targeting information and the index information from the advertisement DB 350, in step 926, and receives the advertising information corresponding to the targeting information and the index information from the advertisement DB 350, in step 928. In another example, the advertising server 300 may directly search the advertisement DB 350 for advertising information corresponding to the targeting information and the index information, to obtain the advertising information.

In step 930, the advertising server 300 delivers the advertising information received or searched from the advertisement DB 350, to the mobile terminal 100.

Upon receiving the advertising information from the advertising server 300, the mobile terminal 100 outputs the advertising information, in step 934. For example, the mobile terminal 100 outputs video, photo, text, web site address, URL information, application information, and the like, corresponding to the received advertising information, thereby providing the advertising information to the user.

In step 932, the mobile terminal 100 notifies the billing server 400 of its provision of advertising information to the user. In another example, after the advertising server 300 provides the advertising information to the mobile terminal 100, the advertising server 300 may notify the billing server 400 of its provision of advertising information to the mobile terminal 100. In step 936, the billing server 400 bills for the advertisement provision to the mobile terminal 100, in accordance with a predetermined billing policy. The billing server 400 may perform billing in accordance with a different billing policy depending on the provision method, such as whether the advertisement has been provided by motion recognition or by user input.

Reference will now be made to detailed structures of the mobile terminal 100, the advertising server 300, the advertisement DB 350 and the billing server 400 for providing advertisements.

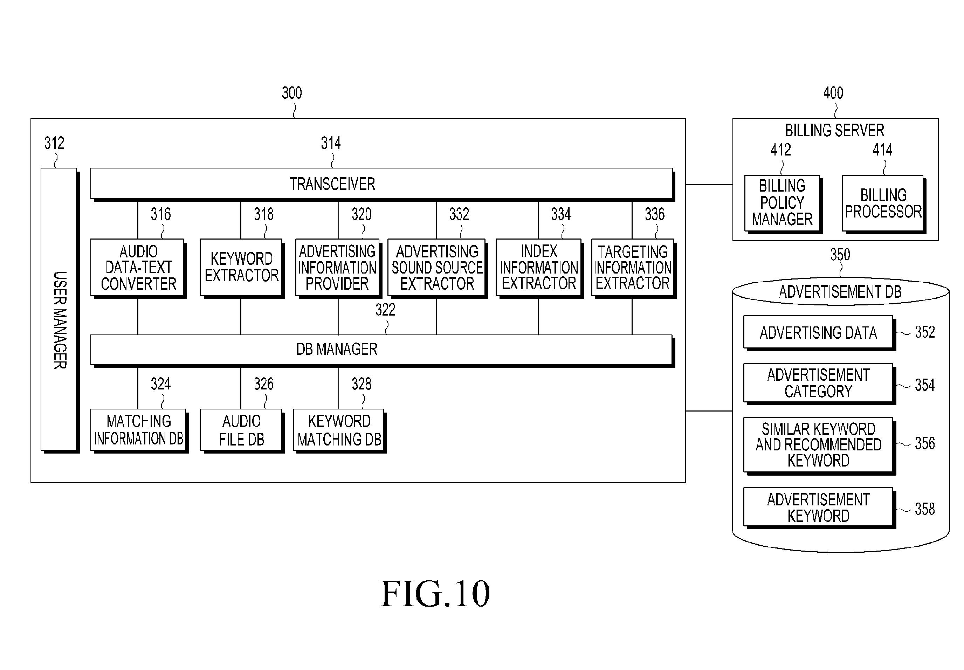

FIG. 10 is a diagram illustrating structures of the advertising server 300, the advertisement DB 350 and the billing server 400, according to an embodiment of the present invention.

Referring to FIG. 10, the advertisement DB 350 stores advertising information for the advertisements that at least one advertiser 500 desires to advertise. The advertising information includes advertising data 352 (for example, advertising data for representing advertisements, such as video, photo, text, web site address, URL information and Application information used to represent the content of each advertisement), advertisement categories 354, advertisement keywords 358, and similar keywords and recommended keywords 356 for the advertisement keywords. The advertisement DB 350 provides advertising data corresponding to a keyword to the advertising server 300, or if there is no advertising data corresponding to the keyword, the advertisement DB 350 provides a similar keyword corresponding to an advertisement category, to which the keyword belongs, to the advertising server 300.

The advertising server 300 receives advertising audio data from the mobile terminal 100, and provides advertising information for the advertising audio data. The advertising server 300 includes a user manager 312, a transceiver 314, an audio data-text converter 316, a keyword extractor 318, an advertising information provider 320, a DB manager 322, a matching information DB 324, an audio file DB 326, a keyword matching DB 328, an advertising sound source extractor 332, an index information extractor 334, and a targeting information extractor 336.

The user manager 312 manages user information for the user of the mobile terminal 100, manages access information, monitors access by the user of the mobile terminal 100, and manages advertising information used by the user of the mobile terminal 100. The transceiver 314 receives advertising audio data from the mobile terminal 100, and transmits advertising information corresponding to the advertising audio data to the mobile terminal 100.

The audio file DB 326 stores received advertising audio data in a file. The keyword matching DB 328 stores a keyword(s) matched to the keyword extracted from the advertising audio data. The matching information DB 324 stores keyword information that was matched in advance.

The DB manager 322 manages the storing of information in the audio file DB 326, the keyword matching DB 328 and the matching information DB 324, and the outputting of the stored information.

The advertising information provider 320 requests a search for advertising information corresponding to a keyword from the advertisement DB 350, using the keyword matched to the keyword extracted by the keyword extractor 318, receives the searched advertising information, and transmits the received advertising information to the mobile terminal 100 through the transceiver 314. The advertising information provider 320 searches for the advertising information corresponding to the advertising sound source extracted by the advertising sound source extractor 332. The advertising information provider 320 searches for advertising information corresponding to the index information extracted by the index information extractor 334. In addition, the advertising information provider 320 searches for advertising information corresponding to the targeting information extracted by the targeting information extractor 336. The advertising information provider 320 notifies the billing server 400 of its transmission of the advertising information to the mobile terminal 100.

The advertising sound source extractor 332 extracts an advertising sound source corresponding to the advertising audio data from the advertising sound source DB 360, and provides the extracted advertising sound source to the advertising information provider 320.

The index information extractor 334 extracts index information corresponding to the advertising audio data from the index information DB 370, and provides the extracted index information to the advertising information provider 320.

The targeting information extractor 336 extracts targeting information from the targeting information DB 380 using the targeting purpose data, and provides the extracted targeting information to the advertising information provider 320.

The billing server 400 includes a billing policy manager 412 and a billing processor 414. The billing policy manager 412 stores a billing policy for each advertisement to be provided by motion recognition of the mobile terminal 100. The billing policy manager 412 may store a different billing policy depending on whether the advertisement has been provided by motion recognition or by user input. Upon receiving the advertising information, the billing processor 414 handles billing in accordance with the billing policy of the billing policy manager 412. For example, according to embodiments of the present invention, billing may be performed upon occurrence of a motion, and many advertisers may allot a larger amount of money on advertisements through auction, to purchase their desired keywords. In addition, it is possible to measure how often the users have requested advertisements while watching or listening to the advertisements, thereby making it possible to measure the advertising effectiveness based on motion recognition. The measurement of the advertising effectiveness may refer to, for example, measuring the number of times that the users have received advertisements through motion recognition, or measuring the number of purchases that the users have made after receiving and being influenced by the advertisements.

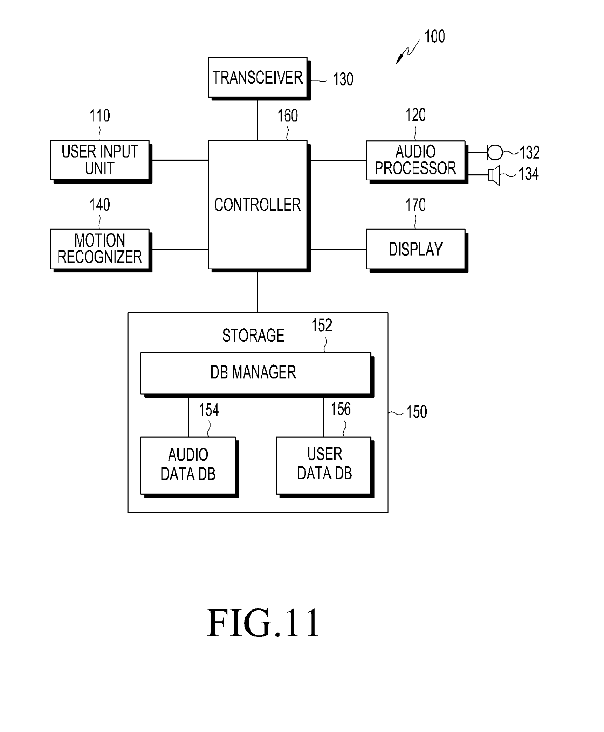

FIG. 11 is a diagram illustrating a structure of the mobile terminal 100 for providing advertisements, according to an embodiment of the present invention.

Referring to FIG. 11, the mobile terminal 100 includes a user input unit 110, an audio processor 120, a transceiver 130, a motion recognizer 140, a storage 150, a controller 160, and a display 170.

The user input unit 110 may have a keypad or a touch screen including a combination of multiple keys used to input various numbers, characters and symbols, and to enter various user commands. In accordance with an embodiment of the present invention, the user input unit 110 receives an advertising application execution request or an audio recording request from the user, and forwards the requests to the controller 160.

The audio processor 120, under control of the controller 160, receives advertising audio signals from a microphone 132, records the received advertising audio signals, and converts the recorded advertising audio signals into advertising audio data.

Under control of the controller 160, the transceiver 130, which takes charge of wired/wireless communication, transmits advertising audio data to the advertising server 300, and receives advertising information corresponding to the advertising audio data from the advertising server 300.

The motion recognizer 140 includes a motion sensor for detecting motions of the mobile terminal 100, and recognizes the motions of the mobile terminal 100, which are detected by the motion sensor. The motion recognizer 140 determines whether a detected motion corresponds to a predetermined motion. If the detected motion corresponds to the predetermined motion, the motion recognizer 140 provides the motion detection information to the controller 160. For example, the predetermined motion may be a motion that is determined in advance to correspond to the transmission of advertising audio data, or a motion that is determined in advance to correspond to the input of an advertisement request.

The storage 150 may include a nonvolatile memory, which is implemented with, for example, a flash memory, a hard disk and the like, and stores data or programs needed to control operations of the mobile terminal 100. In accordance with embodiments of the present invention, the storage 150 includes a DB manager 152, an audio data DB 154 and a user information DB 156. The DB manager 152 manages the input/output and storage for data of the audio data DB 154 and the user information DB 156. The audio data DB 154 stores advertising audio data picked up and processed by the microphone 132. The user information DB 156 stores basic user information for identification of the user or the mobile terminal 100, such as, for example, a user's personal information and a mobile terminal ID.

The controller 160 controls the overall operation of the mobile terminal 100. In accordance with embodiments of the present invention, upon receiving a request (for example, an advertising application execution request or an audio recording request) from the user input unit 110, the controller 160 controls the audio processor 120 to record advertising audio signals and store advertising audio data thereof. If a predetermined motion is detected by the motion recognizer 140, the controller 160 may control the audio processor 120 to record advertising audio signals and store advertising audio data thereof. Specifically, as an example, the controller 160 may determine whether a predetermined motion is recognized on a standby screen. If the predetermined motion is recognized, the controller 160 may record advertising audio signals by executing an advertising application for providing advertisements. In another example, the controller 160 may determine whether a predetermined motion is recognized, while an advertising application is being executed. If the predetermined motion is recognized, the controller 160 may record advertising audio signals. In a further example, the controller 160 may determine whether a predetermined motion is recognized, by executing an advertising application depending on a user input, such as, for example, a key input or a touch input. If the predetermined motion is recognized, the controller 160 may record advertising audio signals.

The controller 160 stores recorded advertising audio signals, and controls the transceiver 130 to transmit the stored audio data to the advertising server 300 or to transmit the audio data and targeting purpose data to the advertising server 300. Upon receiving the advertising information, the controller 160 outputs the received advertising information.

The display 170 may be embodied as a Liquid Crystal Display (LCD), an Organic Electro Luminescence Display (OELD) and the like. Under control of the controller 160, the display 170 displays the advertising information received from the advertising server 300.

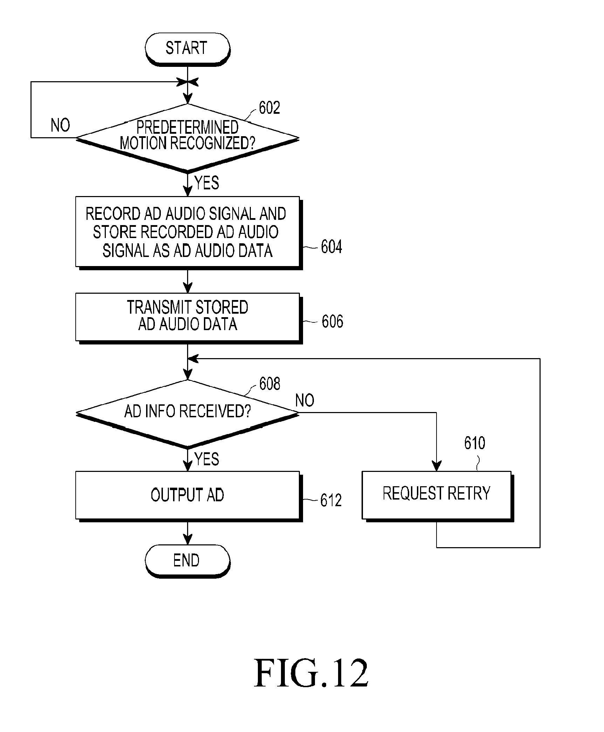

FIG. 12 is a flowchart illustrating an operation of the mobile terminal 100, according to an embodiment of the present invention.

Referring to FIG. 12, the controller 100 determines whether a predetermined motion is recognized, in step 602. For example, while listening to or watching an advertisement that includes audio signals, which is provided on an advertising medium such as, for example, a TV, a PC and a radio, the user may perform a motion to receive advertising information for the advertisement that he/she is listening to.

In an example, the mobile terminal 100 may recognize a predetermined motion on a standby screen depending on the user's action. In another example, the mobile terminal 100 may recognize a predetermined motion depending on the user's action, while an advertising application is being executed. In a further example, the mobile terminal 100 may recognize a predetermined motion depending on the user's action, by executing an advertising application depending on a user input such as, for example, a key input or a touch input.

Although embodiments of the present invention assume that the mobile terminal 100 determines whether a motion is recognized, the mobile terminal 100 may determine if there is a user input such as, for example, a touch input and a key input.

Upon detecting a predetermined motion, the mobile terminal 100 records advertising audio signals, converts the recorded advertising audio signals into advertising audio data, and stores the advertising audio data, in step 604.

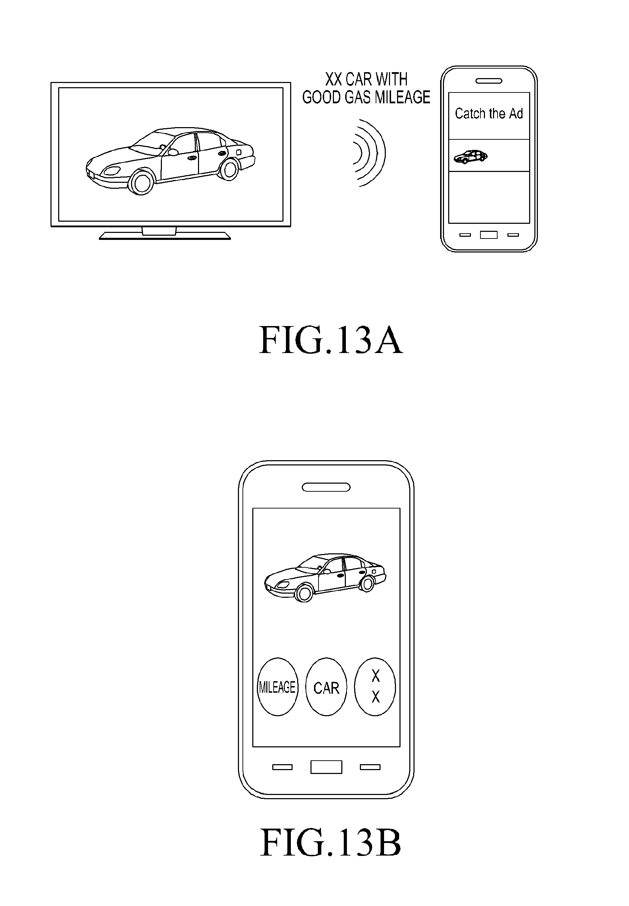

FIG. 13A is a diagram illustrating recording of advertising audio signals upon user's request in a mobile terminal, according to an embodiment of the present invention. Referring to FIG. 13A, if a predetermined motion is recognized while an advertisement including advertising audio signals such as, for example, 'XX Car with Good Gas Mileage' is being provided for an 'XX' car on the advertising medium 10 such as, for example, a TV, the mobile terminal 100 records the advertising audio signals, converts the recorded advertising audio signals into advertising audio data, and stores the advertising audio data.

Referring back to FIG. 12, in step 606, the mobile terminal 100 transmits the stored advertising audio data to the advertising server 300, or transmits the advertising audio data and targeting purpose data to the advertising server 300.

In step 608, the mobile terminal 100 determines whether it receives advertising information corresponding to the advertising audio data, or advertising information corresponding to the advertising audio data and the targeting purpose data, from the advertising server 300. If no advertising information is received, the mobile terminal 100 requests the user to retry the determination, in step 610, and then returns to step 608.

However, upon receiving advertising information, the mobile terminal 100 outputs the received advertising information, in step 612.

FIG. 13B is a diagram illustrating outputting of advertising information in a mobile terminal, according to an embodiment of the present invention.

Referring to FIG. 13B, the mobile terminal 100 may display video, photo, text, web site, URL information, application information, and the like, corresponding to the received advertising information, on the display 170.

As is apparent from the foregoing description, according to embodiments of the present invention, while listening to an advertisement on a medium such as, for example, a TV, a PC and a radio, the user may conveniently receive its advertising information on the mobile terminal 100 using audio signals included in the advertisement. In addition, advertising agencies may introduce a motion recognition, which recognizes the user's shaking or moving the mobile terminal 100, instead of the existing user's clicking or touching, thereby replacing existing advertisement access methods, so new advertising businesses are available and advertising revenue is created.

Although embodiments of the present invention assume that keyword detection from audio data is performed in the advertising server, the keyword detection from audio data may also be performed in the mobile terminal. In addition, while the advertising medium is assumed to include a TV, a PC or a radio, the advertising medium may include any advertising medium through which advertisements, which include audio signals, may be provided.

While the invention has been shown and described with reference to certain embodiments thereof, it will be understood by those skilled in the art that various changes in form and detail may be made therein without departing from the spirit and scope of the invention as defined by the appended claims and their equivalents.

## Claims

1. An advertisement providing apparatus for receiving and providing advertisements in a mobile terminal, comprising:
an audio processor for receiving and recording an advertising audio signal, and for converting the recorded advertising audio signal into audio data;
a transceiver for transmitting the audio data and targeting purpose data to an advertising server, and for receiving advertising information corresponding to the audio data and the targeting purpose data from the advertising server;
an output unit for outputting the received advertising information; and
a controller for controlling the audio processor to record the advertising audio signal, and for controlling the transceiver to transmit the audio data and the targeting purpose data to the advertising server.

2. The advertisement providing apparatus of claim 1, wherein the targeting purpose data comprises at least one of terminal information, user information and location information.

3. The advertisement providing apparatus of claim 1, wherein the advertising audio signal is for an advertisement, which is output from an advertising medium corresponding to any one of a Television (TV), a Personal Computer (PC) and a radio.

4. The advertisement providing apparatus of claim 1, further comprising a user input unit for receiving an input from a user;
wherein the controller controls the audio processor to receive and record the advertising audio signal depending on whether the input from the user is a predetermined input to the user input unit.

5. The advertisement providing apparatus of claim 4, wherein the user input unit comprises a motion recognizer for recognizing a motion performed by the user on the advertisement providing apparatus, and the predetermined input is a motion of shaking the mobile terminal.

6. The advertisement providing apparatus of claim 1, wherein the advertising information comprises at least one of a video, a photo, text, a web site, Uniform Resource Locator (URL) information and application information.

7. A method for providing advertisements in an advertisement providing apparatus, the method comprising the steps of
receiving and recording an advertising audio signal, converting the recorded advertising audio signal into audio data, and storing the audio data, at the advertisement providing apparatus;
transmitting the audio data and targeting purpose data from the advertisement providing apparatus to an advertising server, and receiving advertising information corresponding to the audio data and the targeting purpose data from the advertising server at the advertisement providing apparatus; and
outputting the advertising information from the advertisement providing apparatus.

8. The method of claim 7, further comprising:
receiving an input from a user at the advertisement providing apparatus; and
receiving and recording the advertising audio signal at the advertisement providing apparatus depending on whether the input from the user is a predetermined input.

9. The method of claim 8, wherein receiving the input from the user comprises:
receiving a motion performed by the user on the advertisement providing apparatus, wherein a predetermined motion is the predetermined input.

10. The method of claim 9, wherein recognizing the predetermined motion comprises:
determining whether the motion performed by the user, while the advertisement providing apparatus is displaying a standby screen; and
determining whether the motion performed by the user is the predetermined motion.

11. An advertising server for providing advertisements to an advertisement providing apparatus, comprising:
a transceiver for receiving audio data and targeting purpose data from the advertisement providing apparatus, for receiving targeting information corresponding to the targeting purpose data, and for transmitting advertising information corresponding to the audio data and the targeting purpose data to the advertisement providing apparatus; and
an advertising information provider for searching for the advertising information corresponding to the audio data and the targeting information from among a plurality of advertising information stored in advance in an advertisement Database (DB).

12. The advertising server of claim 11, further comprising an index information extractor for extracting index information corresponding to the received audio data;
wherein the advertising information provider searches the advertisement DB for the advertising information corresponding to the index information and the targeting information from among the plurality of advertising information stored in advance.

13. The advertising server of claim 11, wherein the transceiver receives index information corresponding to the audio data from an audio server; and
wherein the advertising information provider searches the advertisement DB for the advertising information corresponding to the index information and the targeting information from among the plurality of advertising information stored in advance.

14. A method for providing advertisements to an advertisement providing apparatus in an advertising server, the method comprising the steps of:
receiving audio data and targeting purpose data from the advertisement providing apparatus;
receiving relevant advertising information from among a plurality of advertising information stored in advance in an advertisement Database (DB), using the received audio data and the targeting purpose data; and
transmitting the received advertising information to the advertisement providing apparatus.

15. The method of claim 14, wherein the targeting purpose data comprises at least one of terminal information, user information and location information.
